# EUROPÄISCHE PATENTANMELDUNG

(11) **EP 1 495 888 A1**
(43) Veröffentlichungstag der Anmeldung: **12.01.2005**
(21) Anmeldenummer: 04014154.1
(22) Anmeldetag: 16.06.2004
(51) Int. Cl.: B60J 7/00, B60J 1/20

(54) **Sonnenschutzbaugruppe für ein Fahrzeugdach**

(30) Priorität: 11.07.2003 DE 10331514
(71) Anmelder: ArvinMeritor GmbH, 63128 Dietzenbach (DE)
(72) Erfinder: Grimm, Rainer, 60599 Frankfurt/Main (DE); Biewer, Christian, 64839 Münster (DE); Becher, Thomas, 63110 Rodgau (DE); Böhm, Horst, 60599 Frankfurt/Main (DE)
(74) Vertreter: Sties, Jochen, Dipl.-Ing.

(57) **Zusammenfassung**

Es ist eine Sonnenschutzbaugruppe (11) für ein Fahrzeugdach vorgesehen, mit einer ersten und einer zweiten Führungsschiene (14), einem Rollo (10), das entlang den Führungsschienen (14) nach vorne und hinten verschiebbar ist, einem ersten und einem zweiten Rollo-Antriebselement (18), das zumindest teilweise entlang den Führungsschienen verschiebbar und mit einem Vorderende des Rollos (10) verbunden ist, und einem ersten und einem zweiten drehbaren Spannrad (22), das bezüglich der Führungsschiene stationär angebracht und mit dem Antriebselement (18) derart gekoppelt ist, daß der Rolloabschnitt (10'), der zwischen dem Rollo-Vorderende und den Spannrädern (22) angeordnet ist, straff gespannt gehalten ist.

## Beschreibung

Die Erfindung betrifft eine Sonnenschutzbaugruppe für ein Fahrzeugdach.

Eine solche Sonnenschutzbaugruppe ist im Stand der Technik als sogenanntes Sonnenschutzrollo bekannt, das einer lichtdurchlässigen Öffnung im Fahrzeugdach zugeordnet ist. Die lichtdurchlässige Öffnung kann beispielsweise ein feststehendes Panoramafenster oder aber ein transparenter Deckel eines Schiebedachs sein. Das Sonnenschutzrollo kann zwischen einer geöffneten Stellung, in der es den Lichtdurchtritt durch die Öffnung nicht behindert, und einer geschlossenen Stellung verstellt werden, in der es den Lichteinfall durch die Öffnung entweder vollständig verhindert oder wenigstens abschwächt. Je nach Konstruktion kann das Sonnenschutzrollo auch in verschiedenen Zwischenstellungen zwischen der geschlossenen und der geöffneten Stellung arretiert werden.

Herkömmliche Sonnenschutzrollos verwenden einen Sonnenschutz aus Stoff, der auf einer Welle aufgewickelt ist, wenn er sich in der geöffneten Stellung befindet. Diese Welle muß notwendigerweise gerade sein, damit sie drehbar ist. Da allerdings ein Fahrzeugdach üblicherweise gewölbt ist, führt die gerade verlaufende Welle zu einer merklichen Einschränkung der Kopffreiheit.

Die Aufgabe der Erfindung besteht darin, eine Sonnenschutzbaugruppe zu schaffen, bei der eine größere Kopffreiheit möglich ist.

Zur Lösung dieser Aufgabe ist erfindungsgemäß eine Sonnenschutzbaugruppe für ein Fahrzeugdach vorgesehen, mit einer ersten und einer zweiten Führungsschiene, einem Rollo, das entlang den Führungsschienen nach vorne und hinten verschiebbar ist, einem ersten und einem zweiten Rollo-Antriebselement, das zumindest teilweise entlang den Führungsschienen verschiebbar und mit einem Vorderende des Rollos verbunden ist, und einem ersten und einem zweiten drehbaren Spannrad, das bezüglich der Führungsschiene stationär angebracht und mit dem Antriebselement derart gekoppelt ist, daß der Rolloabschnitt, der zwischen dem Rollo-Vorderende und den Spannrädern angeordnet ist, straff gespannt gehalten ist. Dies ermöglicht, den restlichen Teil des Rollos, also den Abschnitt zwischen dem Rollo-Hinterende und den Spannrädern, in geeigneter Weise zu verstauen, so daß eine möglichst große Kopffreiheit erhalten wird. Beispielsweise kann der Teil des Rollos, der sich hinter den Spannrädern befindet, lose in einem Aufnahmeraum aufgenommen werden. Alternativ ist möglich, diesen Teil des Rollos in Form eines Wickels aufzunehmen. Dieser Wickel kann entweder auf einem separaten Wickelkörper aufgenommen sein, der von einer Feder in der Aufwickelrichtung beaufschlagt wird, oder unmittelbar auf den beiden Spannrändern aufgewickelt werden.

Vorteilhafte Ausgestaltungen der Erfindung ergeben sich aus den Unteransprüchen.

Die Erfindung wird nachfolgend anhand verschiedener Ausführungsformen beschrieben, die in den beigefügten Zeichnungen dargestellt sind. In diesen zeigen:
- Figur 1 in einer perspektivischen Ansicht ein Fahrzeugdach mit einer Sonnenschutzbaugruppe;
- Figur 2 einen Schnitt entlang der Ebene II-II von Figur 1;
- Figur 3 in einer perspektivischen Ansicht eine Sonnenschutzbaugruppe gemäß einer ersten Ausführungsform der Erfindung;
- Figur 4 einen Schnitt entlang der Ebene IV-IV von Figur 3;
- Figur 5 in einer abgebrochenen Schnittansicht eine Variante zur ersten Ausführungsform;
- Figur 6 in einer schematischen, abgebrochenen Ansicht eine Sonnenschutzbaugruppe gemäß einer zweiten Ausführungsform der Erfindung; und
- Figur 7 in einer schematischen Schnittansicht eine Variante zur zweiten Ausführungsform.

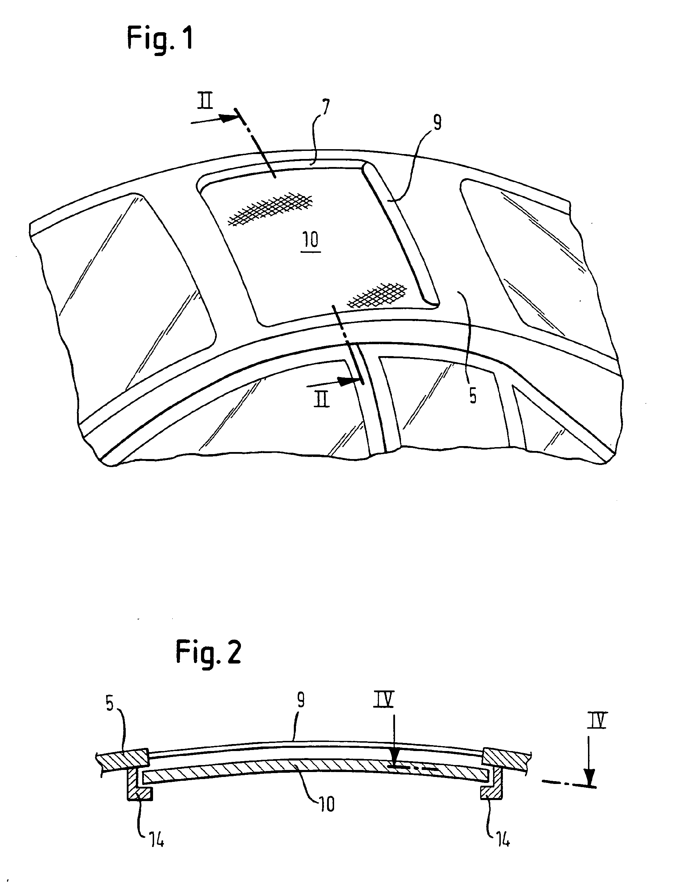

In Figur 1 ist schematisch ein Fahrzeugdach 5 gezeigt, das mit einer Dachöffnung 7 versehen ist. Die Dachöffnung 7 kann in bekannter Weise von einem Deckelteil 9 verschlossen werden, das in Figur 1 in seiner geöffneten, bezüglich des Fahrzeugs nach hinten verschobenen Stellung gezeigt ist. Das Deckelteil besteht aus einem transparenten Material, so daß es lichtdurchlässig ist.

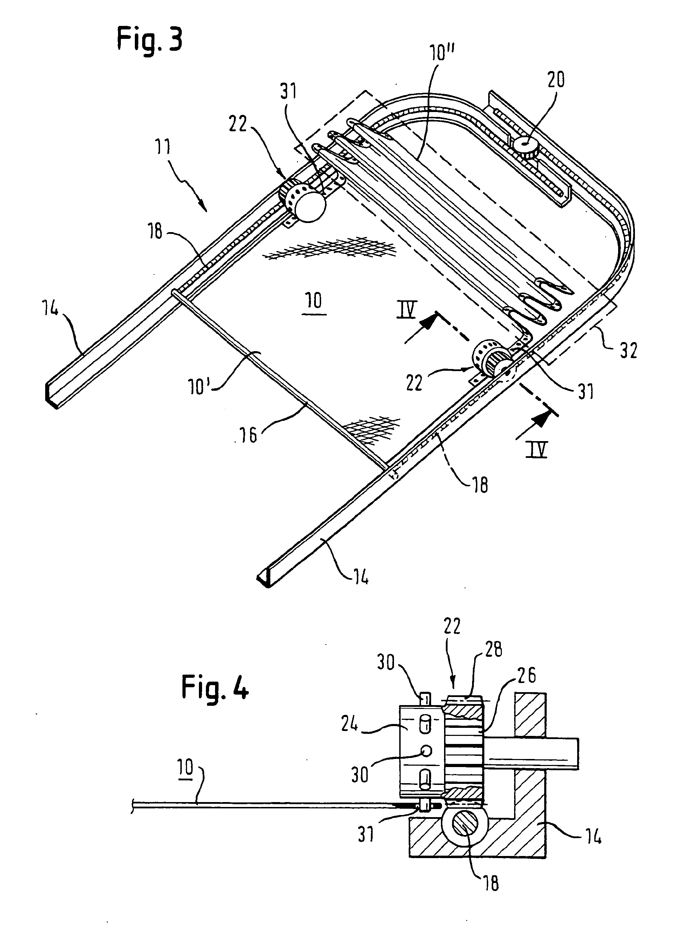

Unterhalb des Deckelteils 9 ist ein Rollo 10 angeordnet, das zusammen mit später erläuterten Bauteilen, die zu seiner Führung und Betätigung dienen, eine Sonnenschutzbaugruppe 11 (siehe Figur 3) bildet.

Das Rollo 10 ist entlang von zwei Führungsschienen 14 verstellbar, die entlang den in Längsrichtung verlaufenden Seitenrändern der Dachöffnung 7 angeordnet sind. In den beiden Führungsschienen 14 ist ein Spriegel 16 verschiebbar angeordnet, an dem der in Fahrtrichtung des Fahrzeugs betrachtet vordere Rand des Rollos 10 befestigt ist. An jedem Ende des Spriegels 16 ist ein Antriebselement 18 für das Rollo angebracht. Bei den hier gezeigten Ausführungsformen wird als Antriebselement ein zug- und drucksteif geführtes Kabel verwendet, das in den Führungsschienen 14 verschiebbar aufgenommen ist. Die beiden Antriebselemente 18 greifen in ein Zahnrad 20 ein, das drehbar stationär an der Sonnenschutzbaugruppe 11 gelagert ist. Das Zahnrad 20 gewährleistet zum einen, daß die beiden Antriebselemente 18 sich nur synchron bewegen, beispielsweise wenn das Rollo 10 zusammen mit dem Spriegel 16 von Hand in den Führungsschienen 14 verschoben wird. Zum anderen kann das Zahnrad 20 dazu dienen, einen (nicht dargestellten) Elektromotor mit den Antriebselementen 18 so zu verbinden, daß er diese in den Führungsschienen 14 nach vorne und nach hinten verstellen kann.

An jeder Führungsschiene 14 ist drehbar ein Spannrad 22 gelagert (siehe auch Figur 4), das einen Transportabschnitt 24 und ein Antriebsritzel 26 aufweist. Das Antriebsritzel 26 greift mit einer an ihm vorgesehenen Verzahnung 28 so in das Antriebselement 18 ein, daß es bei translatorischer Verstellung des Antriebselementes von diesem in Drehung versetzt wird. Der Transportabschnitt 24 des Spannrades 22 ist auf seiner Umfangsfläche mit mehreren regelmäßig angeordneten stachelartigen Fortsätzen 30 versehen, die in Öffnungen 31 eingreifen, die entlang den Seitenrändern des Rollos 10 vorgesehen sind. Auf diese Weise wird eine Drehung des Spannrades 22, hervorgerufen von einer translatorischen Verschiebung der Antriebselemente 18, in eine translatorische Verschiebung des Rollos 10 umgesetzt.

Die gedachte Verbindungslinie zwischen den beiden Spannrädem 22 unterteilt das Rollo 10 in zwei unterschiedliche Abschnitte, nämlich einen bezüglich der Fahrtrichtung gesehen vorderen Abschnitt 10' und einen hinteren Abschnitt 10". Der vordere Rolloabschnitt 10' wird straff zwischen den beiden Spannrädern 22 und dem Spriegel 16 gehalten, und zwar von den beiden Antriebselementen 18. Bei der Montage der Sonnenschutzbaugruppe 11 wird zu diesem Zweck die Position der beiden Antriebselemente 18 und damit auch des Spriegels 16 relativ zu den beiden Spannrädem 22 so eingestellt, daß sich in dem vorderen Abschnitt des Rollos die gewünschte Spannung einstellt.

Der hintere Rolloabschnitt 10" wird bei der in Figur 3 gezeigten Ausführungsform ungeordnet und lose in einem schematisch angedeuteten Aufnahmeraum 32 aufgenommen. Beim Zurückschieben des Rollos wird das von den Spannrädern 22 freigegebenen Material einfach im Aufnahmeraum abgelegt, und beim Vorschieben des Rollos wird das Material von den Spannrädern 22 erfaßt und in die Führungsschiene eingeführt. Ein besonderer Vorteil bei dieser Art der Aufnahme des hinteren Abschnittes 10" des Rollos 10 besteht darin, daß der Aufnahmeraum mit einem nahezu beliebigen Profil in Querrichtung ausgeführt werden kann, beispielsweise leicht gekrümmt, so daß sich eine besonders große lichte Höhe unterhalb der Sonnenschutzbaugruppe 11 einstellt.

Die Seitenränder des Rollos 10 können verstärkt ausgeführt sein, insbesondere in den Bereichen, in denen die Öffnungen 31 vorgesehen sind. Weiterhin können die Seitenränder verdickt ausgeführt und verschiebbar in den Führungsschienen 14 aufgenommen sein. Auf diese Weise kann das Rollo auch in Querrichtung gespannt gehalten werden.

Gemäß einer nicht dargestellten Weiterbildung kann der Transportabschnitt 24 der Spannräder 22 mit einer im wesentlichen ebenen Umfangsfläche ausgeführt sein, die reibschlüssig am entsprechenden Seitenrand des Rollos angreift.

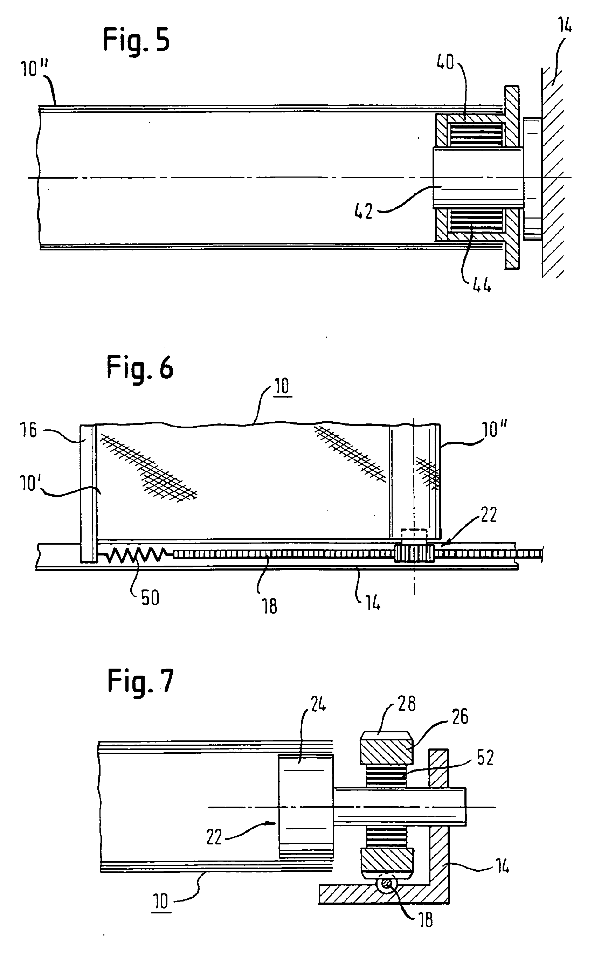

In Figur 5 ist ein Detail einer Weiterbildung zu ersten Ausführungsform gezeigt. Im Unterschied zur ersten Ausführungsform wird der hintere Rolloabschnitt 10" nicht lose, chaotisch in einem Aufnahmeraum aufgenommen, sondern auf zwei Wickelkörper 40 aufgewickelt, die einander gegenüberliegend an den Führungsschienen 14 angebracht sind, und zwar drehbar auf einem Lagerfortsatz 42, der an der Führungsschiene 14 angebracht ist. Zwischen dem Lagerfortsatz 42 und dem Wickelkörper 40 ist eine spiralförmige Wickelfeder 44 angeordnet, die den Wickelkörper 40 in der Aufwickelrichtung beaufschlagt. Der hintere Rand des hinteren Rolloabschnittes 10" ist auf beliebige Weise an den beiden Wickelkörpem 40 befestigt.

Wenn das Rollo zurückgeschoben wird, wird der von den Spannrädern 22 freigegebene hintere Rolloabschnitt 10" automatisch unter der Wirkung der Wickelfedern auf den Wickelkörper aufgewickelt. Da sich die beiden Wickelkörper 40 nur im Bereich der Seitenränder des Rollos 10 befinden, ist der Wickel als solcher im Inneren hohl. Er kann daher von geeigneten Führungselementen so gehalten werden, daß sich eine besonders große lichte Höhe unterhalb der Sonnenschutzbaugruppe ergibt.

In Figur 6 ist schematisch eine Sonnenschutzbaugruppe gemäß einer zweiten Ausführungsform gezeigt. Dieser unterscheidet sich von der ersten Ausführungsform dadurch, daß der hintere Rolloabschnitt 10" nicht hinter den Spannrädern 22 aufgenommen wird, sondern unmittelbar auf die beiden Spannräder 22 aufgewickelt wird. Zu diesem Zweck ist der hintere Rand des Rollos 10 direkt auf dem Transportabschnitt 24 der Spannräder 22 befestigt. Wenn die Spannräder 22 durch Verschiebung der Antriebselemente 18 gedreht werden, wird das Rollo 10 entsprechend der Drehrichtung aufgewickelt oder abgewickelt. Auch hier sorgt der mit den Antriebselementen 18 gekoppelte Spriegel 16 dafür, daß der vordere Rolloabschnitt 10' gespannt gehalten wird.

Da sich allerdings der Durchmesser des auf den Spannrädern 22 gebildeten Wickels in Abhängigkeit von der Menge des dort aufgewickelten Rollomaterials ändert, ändert sich auch die Länge von auf- bzw. abgewickeltem Rollo je Drehwinkel der Spannräder. Bei fast vollständig nach hinten verschobenem Rollo und entsprechend dickem Wickel wird also bei einer vorbestimmten Verschiebung der Antriebselemente 18 eine größere Länge an Rollomaterial auf- bzw. abgewickelt als bei fast vollständig nach vorne verschobenen Rollo und dementsprechend dünnerem Wickel. Anders ausgedrückt ändert sich beim Verschieben des Rollos, unter der Annahme einer konstanten Verstellgeschwindigkeit der Antriebselemente, die Verstellgeschwindigkeit des vorderen Rolloabschnittes 10' und damit des Spriegels 16. Zum Ausgleich der unterschiedlichen Verstellgeschwindigkeiten ist ein Längenausgleichselement vorgesehen, das hier aus Druckfeder 50 ausgebildet ist. Die Druckfeder ist zwischen den Antriebselementen 18 und dem Spriegel 16 angeordnet und spannt den Abschnitt 10' des Rollos vor. Gleichzeitig nimmt es die Relativverschiebung zwischen den Antriebselementen 18 und dem Spriegel 16 bei der Verstellung des Rollos auf.

In Figur 7 ist eine Variante zur in Figur 6 gezeigten Ausführungsform dargestellt. Der Unterschied zur Ausführungsform von Figur 6 besteht darin, daß als Längenausgleichselement eine Spiralfeder 52 verwendet wird, die zwischen dem Antriebsritzel 26 des Spannrades 22 und dem Transportabschnitt 24 wirksam ist. Die Spiralfeder 52 sorgt zum einen für die nötige Vorspannung des vorderen Rolloabschnittes 10'. Zum anderen kompensiert sie die Relatiwerschiebung, die sich bei der Verstellung des Rollos ergibt zwischen dem Transportabschnitt einerseits, der über das Rollo und den Spriegel mit den Antriebselementen gekoppelt ist, und den Antriebsritzeln andererseits, die direkt mit den Antriebselementen gekoppelt sind.

## Patentansprüche

1. Sonnenschutzbaugruppe (11) für ein Fahrzeugdach, mit einer ersten und einer zweiten Führungsschiene (14), einem Rollo (10), das entlang den Führungsschienen (14) nach vorne und hinten verschiebbar ist, einem ersten und einem zweiten Rollo-Antriebselement (18), das zumindest teilweise entlang den Führungsschienen verschiebbar und mit einem Vorderende des Rollos (10) verbunden ist, und einem ersten und einem zweiten drehbaren Spannrad (22), das bezüglich der Führungsschiene stationär angebracht und mit dem Antriebselement (18) derart gekoppelt ist, daß der Rolloabschnitt (10'), der zwischen dem Rollo-Vorderende und den Spannrädern (22) angeordnet ist, straff gespannt gehalten ist.

2. Sonnenschutzbaugruppe nach Anspruch 1, **dadurch gekennzeichnet, daß** das Spannrad (22) einen Transportabschnitt (24) aufweist, der auf seinem Umfang mit Fortsätzen (30) versehen ist, und daß das Rollo (10) entlang seinen Seitenrändern in regelmäßigen Abständen mit Öffnungen (31) versehen ist, in welche die Fortsätze eingreifen können.

3. Sonnenschutzbaugruppe nach Anspruch 1, **dadurch gekennzeichnet, daß** das Spannrad (22) einen Transportabschnitt aufweist, der eine im wesentlichen ebene Umfangsfläche aufweist, die reibschlüssig am entsprechenden Seitenrand des Rollos (10) angreift.

4. Sonnenschutzbaugruppe nach einem der vorhergehenden Ansprüche, **dadurch gekennzeichnet, daß** die Seitenränder des Rollos (10) mit einer Verstärkung versehen sind.

5. Sonnenschutzbaugruppe nach einem der vorhergehenden Ansprüche, **dadurch gekennzeichnet, daß** die Seitenränder des Rollos (10) jeweils mit einem verdickten Verankerungsabschnitt versehen sind, der verschiebbar in der Führungsschiene (14) aufgenommen ist.

6. Sonnenschutzbaugruppe nach einem der vorhergehenden Ansprüche, **dadurch gekennzeichnet, daß** ein Spriegel (16) vorgesehen ist, der am vorderen Rand des Rollos (10) angebracht ist, und daß das Antriebselement (18) an dem Spriegel angreift.

7. Sonnenschutzbaugruppe nach einem der vorhergehenden Ansprüche, **dadurch gekennzeichnet, daß** das Antriebselement (18) ein zug- und drucksteif geführtes Antriebskabel mit einer gewellten oder gezahnten Außenkontur ist.

8. Sonnenschutzbaugruppe nach Anspruch 7, **dadurch gekennzeichnet, daß** das Spannrad (22) ein Antriebsritzel (26) aufweist, das in das Antriebskabel formschlüssig eingreift.

9. Sonnenschutzbaugruppe nach einem der vorhergehenden Ansprüche,
**dadurch gekennzeichnet, daß** der Abschnitt (10") des Rollos (10), der sich hinter den Spannrädem (22) befindet, lose in einem Aufnahmeraum (32) aufgenommen ist.

10. Sonnenschutzbaugruppe nach einem der Ansprüche 1 bis 8, **dadurch gekennzeichnet, daß** der Abschnitt (10") des Rollos (10), der sich hinter den Spannrädern (22) befindet, in der Form eines Wickels aufgenommen ist.

11. Sonnenschutzbaugruppe nach Anspruch 10, **dadurch gekennzeichnet, daß** der Wickel an seinen Seitenrändern auf jeweils einem Wickelkörper (40) aufgenommen ist, der von einer Feder (44) in der Aufwickelrichtung beaufschlagt wird.

12. Sonnenschutzbaugruppe nach Anspruch 10, **dadurch gekennzeichnet, daß** der Wickel unmittelbar auf den beiden Spannrädern (22) aufgewickelt ist.

13. Sonnenschutzbaugruppe nach Anspruch 12, **dadurch gekennzeichnet, daß** ein Längenausgleichselement (50; 52) vorgesehen ist, um die sich aufgrund des ändernden Wickeldurchmessers ändernde Wickelstrecke auszugleichen.

14. Sonnenschutzbaugruppe nach Anspruch 13, **dadurch gekennzeichnet, daß** das Längenausgleichselement eine Druckfeder (50) ist, die zwischen dem Antriebskabel (18) und dem vorderen Rand des Rollos (10) angeordnet ist.

15. Sonnenschutzbaugruppe nach Anspruch 13, **dadurch gekennzeichnet, daß** das Längenausgleichselement eine Spiralfeder (52) ist, die zwischen dem Antriebsritzel (26) und dem Transportabschnitt (24) angeordnet ist.
